# EUROPÄISCHE PATENTSCHRIFT

(11) **EP 2 880 349 B1**
(45) Veröffentlichungstag und Bekanntmachung des Hinweises auf die Patenterteilung: **07.03.2018**
(21) Anmeldenummer: 13730194.1
(22) Anmeldetag: 14.06.2013
(51) Int. Cl.: F16L 37/098

(54) **SCHNELLVERBINDUNGSANORDNUNG ZUR LÖSBAREN VERBINDUNG EINER MEDIENLEITUNG MIT EINEM STUTZEN**
QUICK CONNECTION ARRANGEMENT FOR DETACHABLY CONNECTING A MEDIA LINE TO A CONNECTING PIECE
DISPOSITIF DE RACCORDEMENT RAPIDE POUR LE RACCORDEMENT LIBÉRABLE D'UNE CONDUITE DE FLUIDE À UNE RALLONGE

(30) Priorität: 30.07.2012 DE 102012106925
(43) Veröffentlichungstag der Anmeldung: 10.06.2015
(73) Patentinhaber: ContiTech Schlauch GmbH, 30165 Hannover (DE)
(72) Erfinder: DUDE, Holger, 34516 Vöhl-Obernburg (DE)
(74) Vertreter: Finger, Karsten
(86) Internationale Anmeldenummer: PCT/EP2013/062320
(87) Internationale Veröffentlichungsnummer: WO 2014/019757

(56) Entgegenhaltungen:
- EP-A1- 0 663 557
- EP-A2- 1 873 439
- WO-A1-01/86189
- DE-U1-202004 016 097

## Beschreibung

Die Erfindung betrifft eine Schnellverbindungsanordnung zur lösbaren Verbindung einer Medienleitung mit einem (SAE-)Stutzen. Eine solche Schnellverbindungsanordnung nach dem Oberbegriff des Anspruchs 1 ist aus der EP 0 663 557 A bekannt. Es ist seit langem bekannt, die Verbindung zwischen medienfördernden Leitungen und Anschlüssen mittels Schnellverbindungen oder Schnellkupplungen, sog. Quick-Connectors (QC), durchzuführen, um bei der Montage Zeit zu sparen. Diese Schnellverbindungen werden z.B. für Geräteanschlüsse verwendet, die als Stutzen nach SAE-J 2044 ausgebildet sind.
Derartige Schnellverbindungen werden gerne in der Automobilindustrie z.B. im Niederdruckbereich fluidfördernder Leitungen, d.h. bei Fluiddrücken bis ca. 10 bar, an diversen Schnittstellen wie z.B. am Tank oder bei Pumpen, Filtern, Ventilen usw. verwendet.
Nachteilig ist bei den bekannten derartigen Schnellverbindungen, dass bei den eingesetzten Schnellverbindungen nicht erkennbar ist, ob das Vaterteil (SAE-Stutzen) ordnungsgemäß verrastet ist. Ist die Verrastung der Schnellverbindung nicht ordnungsgemäß erfolgt, kann sich diese im Betrieb lösen, d.h. die fluidführende Leitung löst sich unkontrolliert vom Stutzen und das Fluid tritt massiv in z.B. den Motorraum des Fahrzeugs aus. Besonders bei Kraftstoffleitungen kann dies sehr gefährlich für den Benutzer des Fahrzeuges sein, da hierdurch ein Fahrzeugbrand durch auslaufenden Kraftstoff verursacht werden kann.

Die Aufgabe der vorliegenden Erfindung ist es, eine Schnellverbindungsanordnung der eingangs beschriebenen Art bereit zu stellen, bei der ein schnelles und einfaches Verbinden von Medienleitung und Stutzen ermöglicht wird und sich gleichzeitig optisch oder taktil einfach und zuverlässig erkennen lässt, dass die Schnellverbindung ordnungsgemäß und sicher verrastet ist.
Die Aufgabe wird erfindungsgemäß durch die Merkmale des Anspruchs 1 gelöst. Vorteilhafte Weiterbildungen sind in den Unteransprüchen beschrieben.

Der vorliegenden Erfindung liegt die Erkenntnis zugrunde, dass die erfolgreiche Verrastung bzw. Verriegelung zwischen Stutzen und Medienleitung optisch oder optisch und taktil dadurch angezeigt werden kann, dass die vollständige Verriegelung der Schnellverbindungsanordnung durch das äußere Verriegelungselement bewirkt wird und sich dieser Verriegelungszustand erkennbar von dem nicht-abschließend bzw. nichteinwandfreien Verriegelungszustand der Schnellverbindungsanordnung erkennbar unterscheidet.
Diese Erkenntnis wird erfindungsgemäß dadurch umgesetzt, dass ein inneres Verriegelungselement zunächst den Stutzen in der Stutzenöffnung des Gehäuses der Schnellverbindungsanordnung verriegelt und dieses dann seinerseits von außen durch ein äußeres Verriegelungselement verriegelt wird. Dabei ist dieser zweite Verriegelungsschritt von außen einfach und sicher optisch und ggfs. auch zusätzlich taktil erkennbar, so dass eine sichere und schnelle Verbindung geschaffen wird, deren erfolgreiche, sichere und zuverlässige Montage einfach, schnell und sicher von außen geprüft werden kann. Gleichzeit können diese beiden Verriegelungsschritte und damit die Schnellverbindung auch wieder einfach, schnell und zerstörungsfrei aufgehoben werden. Danach können sowohl der Stutzen als auch die erfindungsgemäße Schnellverbindungsanordnung wieder erfindungsgemäß weiterverwendet werden.

Das Gehäuse sowie das innere und äußere Verriegelungselement können einen Kunststoff aufweisen oder aus diesem bestehen. Als Kunststoff kann vorzugsweise ein Polyamid (PA), Polyphthalamid (PPA) oder Polyphenylensulfid (PPS) verwendet werden. Besonders bevorzugt wird als Material des Gehäuses PA12, PA612, PA610, PPA oder PPS, als Material des inneren Verriegelungselements PA11, PA612 oder PA610 und als Material des äußeren Verriegelungselements PA12, PA612, PA610 verwendet.

Gemäß einem Aspekt der Erfindung weist das Gehäuse wenigstens eine Verriegelungsarmaussparung auf, aus der ein Verriegelungsarm des inneren Verriegelungselements radial herausgedrückt werden kann. Das äußere Verriegelungselement weist wenigstens eine Verriegelungsarmabdeckung auf, die in einer ersten Position die Verriegelungsarmaussparung freigeben und in einer zweiten Position die Verriegelungsarmaussparung blockieren kann.

Vorteilhaft ist hierbei, dass durch radial aus dem Gehäuse herausdrückbare Verriegelungsarme des inneren Verriegelungselements ein einfacher Rastmechanismus zur Verrastung eines Bundes des Stutzens geschaffen werden kann. Gleichzeitig kann durch das Verhindern des Herausdrückens der Verriegelungsarme durch die äußere Blockade mittels der Verriegelungsarmabdeckung des äußeren Verriegelungselements eine einfache Sicherung des verrasteten Stutzens erfolgen, welcher ferner sowohl optisch als auch taktil einfach und sicher durch die hierfür erforderliche Positionsänderung des äußeren Verriegelungselement erkennbar ist.

Gemäß einem weiteren Aspekt der Erfindung kann das äußere Verriegelungselement zwischen der ersten Position und der zweiten Position im Wesentlichen in Richtung der Längsachse A der Schnellverbindungsanordnung bewegt werden.
Vorteilhast ist hierbei, dass in der Montage eine Längsbewegung schnell und einfach auszuführen ist. Ferner ist eine Positionsänderung des äußeren Verriegelungselements in Längsrichtung einfach und sicher sowohl optisch als auch taktil erkennbar.
Gemäß einem weiteren Aspekt der Erfindung kann das äußere Verriegelungselement sowohl in der ersten Position als auch in der zweiten Position gegenüber dem Gehäuse positioniert gehalten werden.
Vorteilhaft ist hierbei, dass beide Positionen hierdurch definiert eingenommen werden können, z.B. durch ein Verrasten des äußeren Verriegelungselement am Gehäuse in den beiden Positionen. Hierdurch wird auch verhindert, dass die Blockade der Verriegelungsarmaussparung ungewollt aufgehoben wird, wodurch auch die Verrastung des Stutzens durch das innere Verriegelungselement nicht mehr sicher gegeben wäre. Das innere Verriegelungselement weist wenigstens einen Freigabemechanismus auf, welcher das äußere Verriegelungselement von einem in Richtung der Längsachse A im Wesentlichen unbeweglichen Zustand in einen beweglichen Zustand versetzt, wenn der (SAE-)Stutzen in die Stutzenöffnung eingeführt wird.
Vorteilhaft ist hierbei, dass durch das Einführen des Stutzens in die Stutzenöffnung des Gehäuses das äußere Verriegelungselement in Richtung der Längsachse A verschiebbar freigegeben wird, weil nach vollständigem Einführen und Verrasten des Stutzens in der Stutzenöffnung dieser Zustand schnell und einfach durch das äußere Verriegelungselement gesichert werden kann. Dies vereinfacht und beschleunigt die Montage. Das Gehäuse weist wenigstens eine Aussparung auf, durch die hindurch der Freigabemechanismus des inneren Verriegelungselements einen Blockademechanismus des äußeren Verriegelungselements lösen kann, wenn der (SAE-)Stutzen in die Stutzenöffnung eingeführt wird.
Vorteilhaft ist hierbei, dass durch den Blockademechanismus das äußere Verriegelungselement sicher in seiner (ersten) Position gehalten werden kann und die Freigabe zur Bewegung in Richtung der Längsachse A beim Einführen des Stutzens automatisch erfolgt. Dies vereinfacht und beschleunigt die Montage.
Gemäß einem weiteren Aspekt der Erfindung weist das äußere Verriegelungselement einen Öffnungsring mit wenigstens einem Eindrückbereich auf, so dass das in der zweiten Position blockierte äußere Verriegelungselement durch radial nach innen gerichtete Krafteinwirkung im Eindrückbereich aus der Blockade gelöst werden kann.
Vorteilhaft ist hierbei, dass das Entriegeln des äußeren Verriegelungselement auf diese Weise dadurch erfolgen kann, dass der Öffnungsring radial nach innen gedrückt wird, z.B. manuell, und durch diese radial Verengung in diesem Bereich der Bereich des Öffnungsrings, in dem sich z.B. der Blockademechanismus bzw. die Rastarme des äußeren Verriegelungselements befinden, radial derart ausgeweitet wird, dass hierdurch die Nocken der Rastarme aus den entsprechenden Öffnungsaussparungen des Gehäuses radial gelöst werden, wodurch die Blockade des äußeren Verriegelungselements in der (zweiten) Position, in der das äußere Verriegelungselement das innere Verriegelungselement sichert, gelöst werden kann.
Vorzugsweise sind der Öffnungsring und auch der korrespondierende Bereich des Gehäuses oval ausgebildet, so dass der Eindrückbereich des Öffnungsrings einen größeren Durchmesser aufweist als der Bereich des Öffnungrings, in dem sich z.B. der Blockademechanismus bzw. die Rastarme des äußeren Verriegelungselements befinden. Hierdurch wird die Aufweitung des Öffnungsrings in den Bereichen, in dem sich z.B. der Blockademechanismus bzw. die Rastarme des äußeren Verriegelungselements befinden, beim Eindrücken des Eindrückbereichs begünstigt.

Vorzugsweise weist der ovale Öffnungsring in den Bereichen seinen geringsten Durchmesser auf, in dem sich z.B. der Blockademechanismus bzw. die Rastarme des äußeren Verriegelungselements befinden. Hierdurch wird ebenfalls die Aufweitung dieses Bereichs beim Eindrücken des Eindrückbereichs begünstigt.

Gemäß einem weiteren Aspekt der vorliegenden Erfindung weist das Gehäuse wenigstens einen radial nach außen zeigenden Vorsprung auf, der derart im Wesentlichen von innen radial gegen das äußere Verriegelungselement drücken kann, dass hierdurch eine im Wesentlichen in axialer Richtung A zur Stutzenöffnung hin gerichtete Kraft auf das äußere Verriegelungselement ausgeübt werden kann.

Vorteilhaft ist hierbei, im nicht-montierten Zustand des Stutzens auf diese Weise eine in axialer Richtung A wirkende Vorspannung in Richtung der Stutzenöffnung des Gehäuses auf das äußere Verriegelungselement ausgeübt werden kann, so dass sich das äußere Verriegelungselement beim Einführen des Stutzens selbsttätig zumindest teilweise zum Stutzen hin bewegt, ohne dass hierfür ein Montageschritt erforderlich wird.

Bei entsprechender Bemessung der Vorspannung kann idealerweise erreicht werden, dass sich das äußere Verriegelungselement, sobald es durch den eingeführten Stutzen aus der Blockade in einer ersten Position gelöst wird, aufgrund der Vorspannung in axialer Richtung A soweit zum Stutzen hin bewegt, dass es sich selbsttätig in einer zweiten Position blockiert, in der auch das innere Verriegelungselement durch das äußere Verriegelungselement blockiert wird. Hierdurch kann die Montage wesentlich vereinfacht und beschleunigt werden.

Zwei Ausführungsbeispiele und weitere Vorteile der Erfindung werden nachstehend im Zusammenhang mit den folgenden Figuren erläutert. Darin zeigt:
- Fig. 1: eine perspektivische schematische Schnittdarstellung einer Schnellverbindungsanordnung gemäß einem ersten Ausführungsbeispiel mit Fluidleitung und teilweise eingeführtem aber nicht verriegeltem Stutzen;
- Fig. 2: eine perspektivische schematische geschlossene Darstellung der Schnellverbindungsanordnung gemäß dem ersten Ausführungsbeispiel der Fig. 1;
- Fig. 3: eine perspektivische schematische Darstellung des Gehäuses der Schnellverbindungsanordnung gemäß dem ersten Ausführungsbeispiel;
- Fig. 4: eine perspektivische schematische Darstellung des inneren Verriegelungselements der Schnellverbindungsanordnung gemäß dem ersten Ausführungsbeispiel;
- Fig. 5: eine perspektivische schematische Darstellung des äußeren Verriegelungselements der Schnellverbindungsanordnung gemäß dem ersten Ausführungsbeispiel;
- Fig. 6: eine perspektivische schematische Schnittdarstellung einer Schnellverbindungsanordnung gemäß dem ersten Ausführungsbeispiel mit Fluidleitung und vollständig eingeführtem und verriegelten Stutzen;
- Fig. 7: eine perspektivische schematische Schnittdarstellung einer Schnellverbindungsanordnung gemäß dem ersten Ausführungsbeispiel mit Fluidleitung, verriegeltem Stutzen und verriegeltem inneren Verriegelungselement;
- Fig. 8: eine perspektivische schematische geschlossene Darstellung der Schnellverbindungsanordnung gemäß dem ersten Ausführungsbeispiel der Fig. 7;
- Fig. 9: eine perspektivische schematische Schnittdarstellung einer Schnellverbindungsanordnung gemäß einem zweiten Ausführungsbeispiel mit Fluidleitung und teilweise eingeführtem aber nicht verriegeltem Stutzen;
- Fig. 10: eine perspektivische schematische geschlossene Darstellung der Schnellverbindungsanordnung gemäß dem zweiten Ausführungsbeispiel der Fig. 9;
- Fig. 11: eine perspektivische schematische Darstellung des Gehäuses der Schnellverbindungsanordnung gemäß dem zweiten Ausführungsbeispiel;
- Fig. 12: eine perspektivische schematische Darstellung des äußeren Verriegelungselements der Schnellverbindungsanordnung gemäß dem zweiten Ausführungsbeispiel;
- Fig. 13: eine perspektivische schematische Schnittdarstellung einer Schnellverbindungsanordnung gemäß dem zweiten Ausführungsbeispiel mit Fluidleitung und vollständig eingeführtem und verriegelten Stutzen;
- Fig. 14: eine perspektivische schematische Schnittdarstellung einer Schnellverbindungsanordnung gemäß dem zweiten Ausführungsbeispiel mit Fluidleitung, verriegeltem Stutzen und verriegeltem inneren Verriegelungselement; und
- Fig. 15: eine perspektivische schematische geschlossene Darstellung der Schnellverbindungsanordnung gemäß dem zweiten Ausführungsbeispiel der Fig. 14.

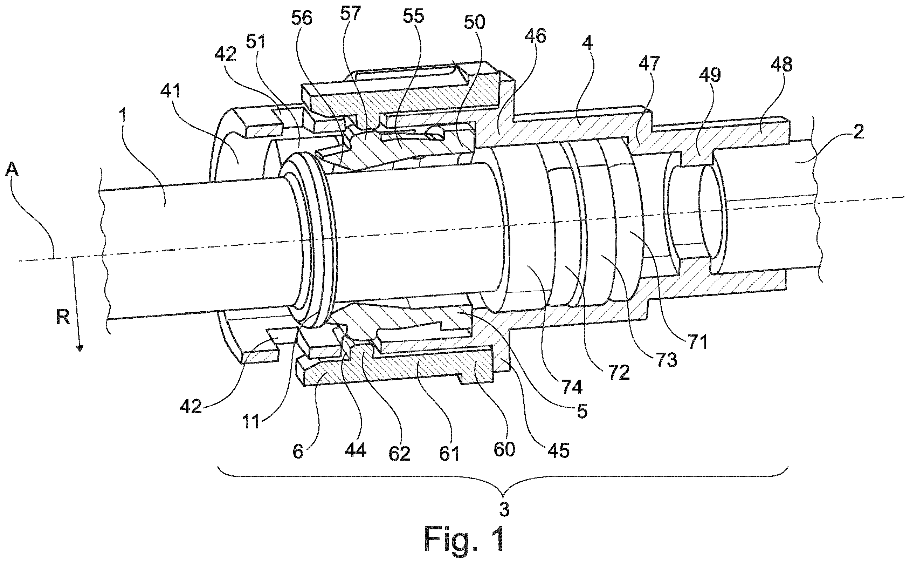

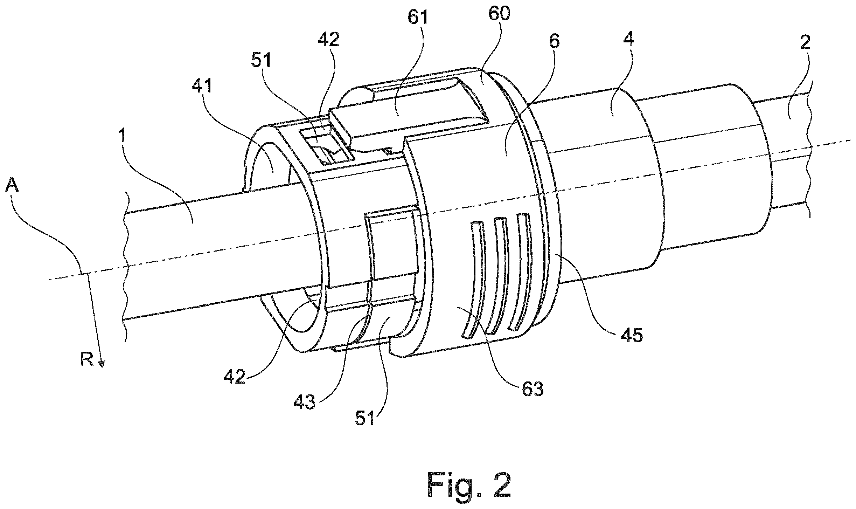

**Fig.** 1 zeigt eine perspektivische schematische Schnittdarstellung einer Schnellverbindungsanordnung 3 gemäß einem ersten Ausführungsbeispiel mit Fluidleitung 2 und teilweise eingeführtem aber nicht verriegeltem Stutzen 1. **Fig. 2** zeigt eine perspektivische schematische geschlossene Darstellung der Schnellverbindungsanordnung 3 der **Fig. 1****.**

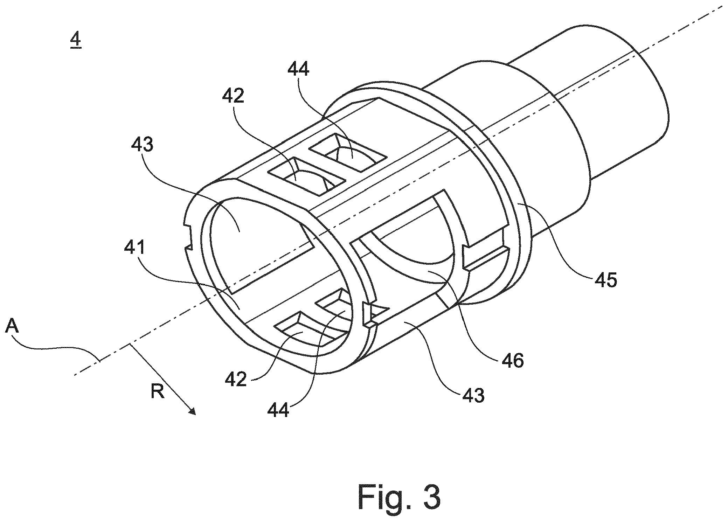

Die Schnellverbindungsanordnung 3 weist ein Gehäuse 4, ein inneres Verriegelungselement 5 und ein äußeres Verriegelungselement 6 auf, die in den **Fig. 3 bis 5** jeweils in einer perspektivischen schematischen Darstellung für das erste Ausführungsbeispiel einzeln dargestellt sind. Dabei beziehen sich die Bezeichnungen "inneres" und "äußeres" Verriegelungselement 5, 6 auf die Anordnung dieser Elemente zueinander bzw. zum Gehäuse 4 in radialer Richtung R.

Das Gehäuse 4 (siehe auch **Fig. 3**) stellt im Wesentlichen einen zylindrischen Körper dar, der in seiner Richtung der Längsachse A von einem Medium durchströmt werden kann. Dieses Medium ist vorzugsweise ein Fluid. An seinem einen Ende in Richtung der Längsachse A weist das Gehäuse 4 eine Öffnung 48 zur Aufnahme einer Fluidleitung 2 auf. Diese kann bis zu einem entsprechenden Anschlag 49 im Inneren des Gehäuses 4 in dessen Öffnung 48 eingeschoben werden. Die Befestigung der eingeschobenen Fluidleitung 2 in der Öffnung 48 kann z.B. kraftschlüssig und bzw. oder formschlüssig durch einen Stutzen mit Tannenbaumprofil erfolgen. Alternativ oder zusätzlich kann diese Befestigung durch eine stoffschlüssige Verbindung wie z.B. durch Schweißen z.B. mittels Reib- oder Laserschweißen ausgeführt werden.

Das Gehäuse 4 weist auf der der Öffnung 48 der Fluidleitung 2 in Richtung der Längsachse A gegenüberliegenden Seite eine Stutzenöffnung 41 zur Aufnahme eines Stutzens 1 (SAE-Stutzen 1) auf. Der Stutzen 1 kann in diese Stutzenöffnung 41 bis zu einem entsprechenden Anschlag 47 im Inneren des Gehäuses 4 eingeschoben werden.

In diesem Ausführungsbeispiel weist der Stutzen 1 an seinem Ende, mit dem der Stutzen 1 in das Gehäuse 4 eingeschoben wird, eine Dichtungsanordnung auf, die, von außen nach innen, einen ersten Dichtungsring 71, einen Abstandsring 73, einen zweiten Dichtungsring 72 und eine Führungsbuchse 74 aufweist. Dabei sind die beiden Dichtungsringe 71, 72 als O-Ringe ausgeführt. Alternativ kann auch eine einfache Dichtungsanordnung 71-74 verwendet werden, die z.B. aus lediglich einem Dichtungsring 71 (O-Ring) besteht.

Der Stutzen 1 weist ferner einen Bund 11 auf, der in diesem Ausführungsbeispiel als geschlossener Ring auf der äußeren Oberfläche des Stutzens 1 ausgebildet ist. Alternativ könnten jedoch auf abschnittsweise ausgebildete Vorsprünge auf der äußeren Oberfläche des Stutzens 1 verwendet werden, um eine erfindungsgemäße Wirkung zwischen dem Stutzen 1 und der Schnellverbindungsanordnung 3 zu erreichen. Der Bund 11 dient der Verriegelung des Stutzens 1 in dem Gehäuse 4 der Schnellverbindungsanordnung 3; diese wird mittels eines inneren Verriegelungselements 5 bewirkt, welche im Inneren des Gehäuses 4 vorgesehen ist.

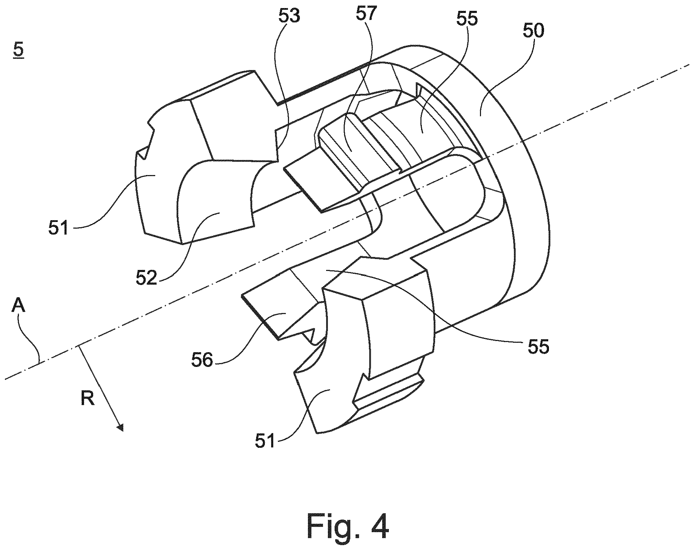

Das innere Verriegelungselement 5 (siehe auch **Fig. 4**) weist einen ringförmig geschlossenen Verriegelungselementkörper 50 auf, von dem sich zum einen zwei einander radial gegenüberliegende Verriegelungsbacken 51 und ca. 90° hierzu versetzt zum anderen zwei einander radial gegenüberliegende Auswerferarme 55 in Richtung der Längsachse A erstrecken. Beide Verriegelungsbacken 51 weisen an ihrer radial innenliegenden Seite eine Einführungsschräge 52 und eine Hintergriffsschräge 53 auf. Dabei ist die Schrägung der Einführungsschräge 52 flacher ausgebildet als die Schrägung der Hintergriffsschräge 53. Beide Auswerferarme 55 weisen an ihren Enden ebenfalls eine Einführungsschräge 56 auf. Ferner besitzen beide Auswerferarme 55 jeweils wenigstens einen Nocken 57, der im Bereich der Einführungsschräge 56 radial nach außen zeigend auf den Auswerferarmen 55 vorgesehen ist.

Die Verriegelungsbacken 51 und Auswerferarme 55 sind durch Aussparungen in Umfangsrichtung so voneinander getrennt, dass sie in Richtung der Längsachse A derart länger dimensioniert sind als in Umfangsrichtung, dass die Verriegelungsbacken 51 und Auswerferarme 55 jeweils in radialer Richtung R elastisch ausgebildet sind, d.h. sich insbesondere an ihren losen Enden von der Längsachse A wegbiegen lassen und sich durch die Rückstellkraft ihres Materials wieder in ihren Ausgangslage zurückfedern.

Das innere Verriegelungselement 5 ist im Inneren des Gehäuses 4 derart angeordnet, dass der ringförmige Verriegelungselementkörper 50 gegen einen entsprechenden Anschlag 46 des Gehäuses 4 in Richtung der Längsachse A anliegen kann. Auf diese Weise zeigen die Verriegelungsbacken 51 und Auswerferarme 55 des inneren Verriegelungselements 5 in Richtung der Längsachse A zur Stutzenöffnung 41 hin. Die Nocken 57 der Auswerferarme 55 ragen dabei in radialer Richtung R nach außen in entsprechende Aussparungen 44 des Gehäuses 4 hinein bzw. liegen diesen radial nach außen zeigend gegenüber.

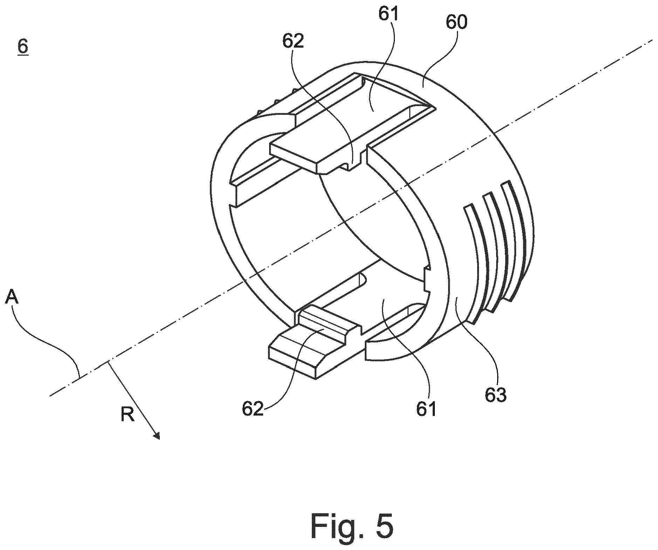

Das äußere Verriegelungselement 6 (siehe auch **Fig. 5**) der Schnellverbindungsanordnung 3 weist in diesem Ausführungsbeispiel ebenfalls einen geschlossenen ringförmigen Verriegelungsringkörper 60 auf, der jedoch alternativ auch U-förmig, d.h. mit einer Öffnung in Umfangsrichtung, ausgeführt sein kann. Von diesem ringförmigen Verriegelungsringkörper 60 erstrecken sich in Richtung der Längsachse A zum einen zwei einander radial gegenüberliegende Rastarme 61 und ca. 90° hierzu versetzt zum anderen zwei einander radial gegenüberliegende Abdeckungen 63. Die Rastarme 61 weisen jeweils einen radial nach innen zeigenden Nocken 62 auf.

Die Rastarme 61 des äußere Verriegelungselements 6 sind ebenso wie die Verriegelungsbacken 51 und Auswerferarme 55 des inneren Verriegelungselements 5 durch Aussparungen derart von den Abdeckungen 63 getrennt, dass die Rastarme 61 in Richtung der Längsachse A derart länger dimensioniert sind als in Umfangsrichtung, dass die Rastarme 61 in radialer Richtung R elastisch ausgebildet sind. Aufgrund ihrer großen Ausdehnung in Umfangsrichtung sind hingegen die Abdeckungen 63 deutlich unelastischer in radialer Richtung R ausgebildet als die Rastarme 61, so dass die Abdeckungen 63 radial angreifenden Kräften vergleichsweise gut widerstehen und daher als starr angesehen werden können.

Das äußere Verriegelungselement 6 ist in dem Bereich um das Gehäuse 4 herum vorgesehen, in dem sich im Inneren des Gehäuses 4 das innere Verriegelungselement 5 befindet. Der ringförmige Verriegelungskörper 60 kann dabei gegen einen entsprechenden Anschlag 45 des Gehäuses 4 in Richtung der Längsachse A anliegen. Auf diese Weise zeigen die Rastarme 61 und Abdeckungen 63 des Verriegelungsrings 6 in Richtung der Längsachse A zur Stutzenöffnung 41 hin. Das äußere Verriegelungselement 6 ist dabei über seine Rastarme 61 formschlüssig mit dem Gehäuse 4 verbunden.

Das Gehäuse 4 (siehe auch **Fig. 3**) weist ferner zum einen zwei einander radial gegenüberliegende Aussparungen 44 auf, in die sowohl die Nocken 57 des Auswerferarme 55 von innen als auch die Nocken 62 der Rastarme 61 im unverriegelten Zustand von außen radial eingreifen können, und ca. 90° hierzu versetzt zum anderen zwei einander radial gegenüberliegende Aussparungen 43 für die Verriegelungsbacken 51 des inneren Verriegelungselements 5. Die Verriegelungsbacken 51 ragen dabei sowohl im unverriegelten als auch im verriegelten Zustand des Bundes 11 in die Aussparungen 43 in radialer Richtung R hinein, ohne aus diesen Aussparungen 43 in radialer Richtung R hinauszuragen. Auf diese Weise ist das innere Verriegelungselement 5 über die Verriegelungsbacken 51 mit dem Gehäuse 4 über dessen Aussparungen 43 kraftschlüssig verbunden.

Das Gehäuse 4 weist ferner zwei einander radial gegenüberliegenden Öffnungsaussparungen 42 auf, die in diesem Ausführungsbeispiel in Richtung der Längsachse A zur Stutzenöffnung 41 hin offen ausgebildet sind; alternativ können auch Öffnungsaussparungen 42 verwendet werden, die nicht in Richtung der Längsachse A zur Stutzenöffnung 41 hin offen ausgebildet ist. In diese Öffnungsaussparung 42 können die Nocken 62 der Rastarme 61 im verriegelten Zustand des inneren Verriegelungselements 5 von außen radial eingreifen.

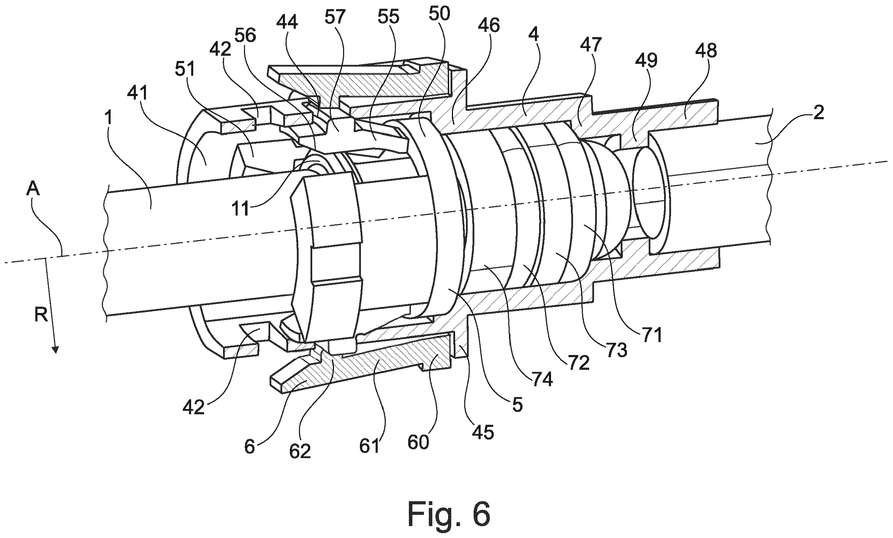

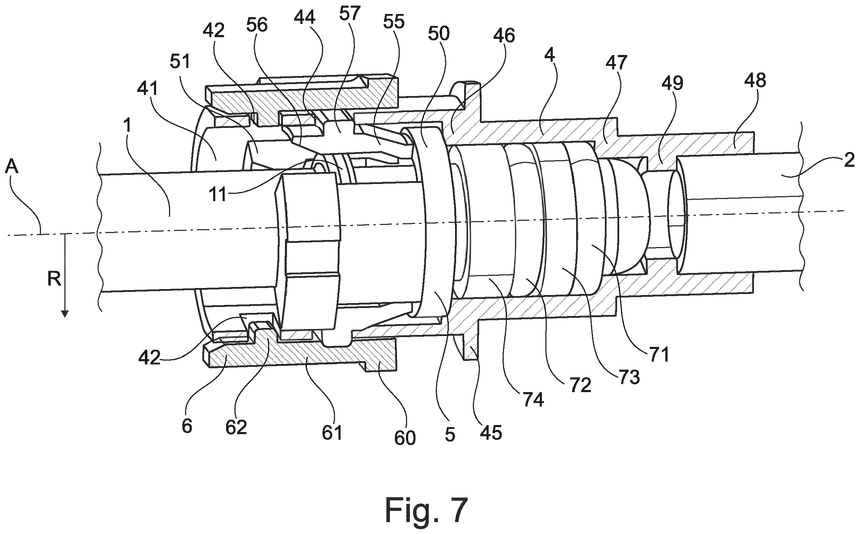

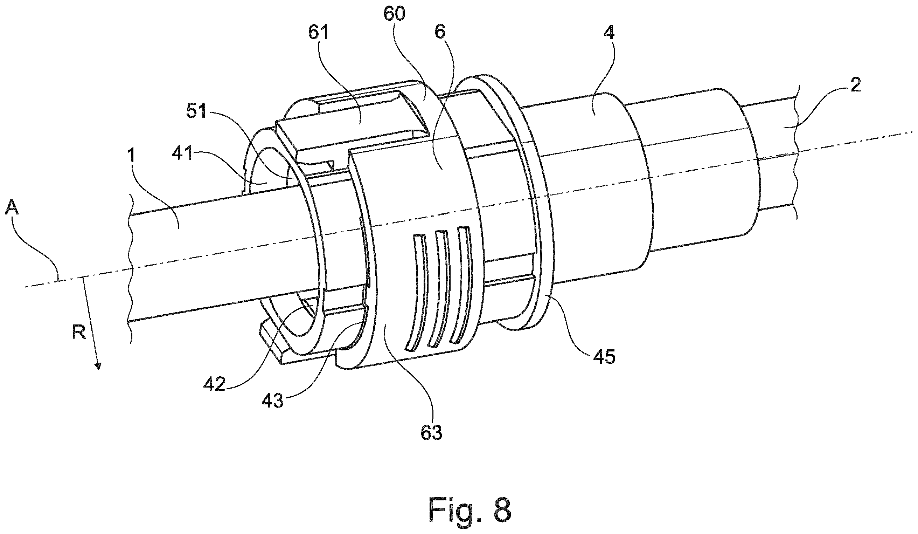

Die Funktionsweise der erfindungsgemäßen Schnellverbindungsanordnung 3 gemäß dem ersten Ausführungsbeispiel wird nun im Folgenden mit Bezug auf die **Fig. 1****,** **2** **und** **6 bis 8** am Beispiel des Einführens und Verriegelns des Stutzens 1 in die Schnellverbindungsanordnung 3 beschrieben, welches sich kurz gefasst wie folgt zusammenfassen lässt:
- Der Stutzen 1 wird in Richtung der Längsachse A in die Stutzenöffnung 41 des Gehäuses 4 eingeführt (vgl. **Fig. 1** **und** **2**);
- Durch weiteres Einführen des Stutzens 1 bis zum Anschlag 47 hebt der Bund 11 über die Einführungsschrägen 52 der Verriegelungsbacken 51 diese an, bis der Bund 11 durch die Hintergriffsschrägen 53 der Verriegelungsbacken 51 verriegelt wird;
- Gleichzeitig hebt der Bund 11 durch die Einführungsschrägen 56 der Auswerferarme 55 diese an, so dass die Nocken 57 der Auswerferarme 55 die Nocken 62 der Rastarme 61 aus den entsprechenden Aussparungen 44 radial herausdrücken, wodurch das äußere Verriegelungselement 6 in Richtung der Längsachse A verschiebbar wird (vgl. **Fig. 6**);
- Durch Verschieben des äußeren Verriegelungselements 6 in Richtung der Längsachse A vom Anschlag 45 weg werden die Abdeckungen 63 über die Aussparungen 43 der Verriegelungsbacken 51 geschoben, so dass die Verriegelungsbacken 51 in radialer Richtung R nach außen blockiert werden. Hierdurch werden die Verriegelungsbacken 51 verriegelt, so dass die Verriegelung des Bundes 11 durch die Verriegelungsbacken 51 nicht mehr aufgehoben werden kann, ohne das äußere Verriegelungselement 6 zuvor zu verschieben. Das äußere Verriegelungselement 6 wird in dieser Position durch die Nocken 62 der Rastarme 61 selbst verriegelt, indem diese Nocken 62 in die Öffnungsaussparungen 42 des Gehäuses 4 eingreifen (vgl. **Fig. 7** **und** **8**).

In den **Fig. 1** **und** **2** ist der Stutzen 1 bereits teilweise aber nicht vollständig in die entsprechende Stutzenöffnung 41 des Gehäuses 4 eingeführt. Dabei werden die Elemente der Dichtungsanordnung 71-74 in Richtung der Längsachse A gegen den entsprechenden Anschlag 47 des Gehäuses 4 und in radialer Richtung R gegen die Innenwand des Gehäuses 4 in diesem Bereich gedrückt, um das Gehäuse 4 hierdurch abzudichten.

In dem in den **Fig. 1** **und** **2** gezeigten Montagezustand berührt der Bund 11 des Stutzens 1 die Einführungsschrägen 52 der Verriegelungsbacken 51 und die Einführungsschrägen 56 der Auswerferarme 55 nicht. Diese befinden sich, ebenso wie die Rastarme 61 des Verriegelungsrings 6, jeweils in einem im Wesentlichen entspannten Zustand, d.h. die Verriegelungsbacken 51, Auswerferarme 55 und Rastarme 61 erstrecken sich im Wesentlichen in Richtung der Längsachse A und unterliegen keinen wesentlichen radial wirkenden Kräften, d.h. sind radial gar nicht bzw. zumindest nicht wesentlichen gegenüber der Längsachse A ausgelenkt. In diesem Ausführungsbeispiel liegen dabei die Innenseiten der Verriegelungsbacken 51 und Auswerferarme 55 linienförmig in Umfangsrichtung auf der äußeren Oberfläche des Stutzens 1 auf; alternativ können die Verriegelungsbacken 51 und bzw. oder Auswerferarme 55 die äußere Oberfläche des Stutzens 1 aufgrund einer radialen Beabstandung auch nicht berühren.

Die Verriegelungsbacken 51 ragen in radialer Richtung R in ihre entsprechenden Aussparungen 43 des Gehäuses 4 hinein, ohne in radialer Richtung R aus diesen hinauszuragen. Die Nocken 57 der Auswerferarme 55 liegen den Nocken 62 der Rastarme 61 im Bereich der entsprechenden Aussparung 44 des Gehäuses 4 in radialer Richtung R gegenüber, wobei sich die Nocken 57, 62 in diesem Ausführungsbeispiel berühren, dies aber nicht für die erfindungsgemäße Funktion der Schnellverbindungsanordnung 3 erforderlich ist.

Der äußere Verriegelungskörper 6 liegt in diesem Ausführungsbeispiel mit seinem ringförmigen Verriegelungskörper 60 an dem entsprechenden Anschlag 45 des Gehäuses 4 an, was jedoch nicht erforderlich ist. In diesem Montagezustand ist es jedoch erforderlich, dass der äußere Verriegelungskörper 6 in Richtung der Längsachse A so gegenüber dem Gehäuse positioniert ist, dass die Aussparungen 43 des Gehäuses 4, in die die Verriegelungsbacken 51 des inneren Verriegelungselements 5 hineinragen, nicht bzw. nur so weit durch die Abdeckungen 63 des äußeren Verriegelungselements 6 verdeckt werden, so dass die Verriegelungsbacken 51 aus diesen Aussparungen 43 radial nach außen hinaus gedrückt werden können.

**Fig. 6** zeigt eine perspektivische schematische Schnittdarstellung einer erfindungsgemäßen Schnellverbindungsanordnung 3 mit Fluidleitung 2 und vollständig eingeführtem und verriegelten Stutzen 1. Hierbei ist der Stutzen 1 so weit in die entsprechende Stutzenöffnung 41 des Gehäuses 4 eingeführt, dass die Dichtungsanordnung 71-74 dichtend gegen den entsprechenden Anschlag 47 des Gehäuses 4 bzw. dessen Innenwand gepresst wird. Dabei kann das Ende des Stutzens 1 durch die Dichtungsanordnung 71-74 hindurch in Richtung der Längsachse A gegen den Anschlag 49 des Gehäuses 4 gedrückt werden, gegen den von der in Richtung der Längsachse A gegenüberliegenden Seite die Fluidleitung 2 anliegt.

Bei diesem vollständigen Einführen werden die Verriegelungsbacken 51 und Auswerferarme 55 des inneren Verriegelungselements 5 durch den Bund 11 des Stutzens 1 in radialer Richtung R federnd ausgelenkt, in dem der Bund 11 diese durch Kontakt mit den Einführungsschrägen 52 der Verriegelungsbacken 51 und Einführungsschrägen 56 der Auswerferarme 55 anhebt. Die Schrägungen der Einführungsschrägen 52 der Verriegelungsbacken 51 und Einführungsschrägen 56 der Auswerferarme 55 sind dabei so zu wählen, dass ein einfaches Einführen des Stutzens 1 gegen die elastischen Rückstellkräfte der Einführungsschrägen 52 der Verriegelungsbacken 51 und Einführungsschrägen 56 der Auswerferarme 55 möglich ist.

Im vollständig eingeführten Zustand hat der Bund 11 des Stutzens 1 die Einführungsschrägen 52 der Verriegelungsbacken 51 in Richtung der Längsachse A vollständig passiert, so dass die Verriegelungsbacken 51 in Einführungsrichtung hinter dem Bund 11 wieder radial zurückfedern und hierdurch hinter den Bund 11 greifen. Dieser wird auf diese Weise durch die Hintergriffsschrägen 53 der Verriegelungsbacken 51 in Richtung der Längsachse A blockiert und verriegelt.

In diesem Zustand sind gleichzeitig die Nocken 57 der Auswerferarme 55 so weit in die entsprechenden Aussparungen 44 des Gehäuses 4 gedrückt, dass die Nocken 57 der Auswerferarme 55 die Nocken 62 der Rastarme 61 soweit aus diesen Aussparungen 44 herausdrücken, dass die Nocken 62 der Rastarme 61 eine Verschiebung des äußeren Verriegelungselements 6 in Richtung der Längsachse A nicht mehr blockieren.

**Fig. 7** zeigt eine perspektivische schematische Schnittdarstellung einer erfindungsgemäßen Schnellverbindungsanordnung 3 mit Fluidleitung 2, verriegeltem Stutzen 1 und verriegeltem inneren Verriegelungselement 5. **Fig. 8** zeigt eine perspektivische schematische geschlossene Darstellung der Schnellverbindungsanordnung der **Fig. 7****.**

In diesem Montagezustand wurde das äußere Verriegelungselement 6 in Richtung der Längsachse A vom entsprechenden Anschlag 45 des Gehäuses 4 weg soweit verschoben, dass die Nocken 62 des Rastarme 61 in die Öffnungsaussparungen 42 des Gehäuses 4 eingreifen und hierdurch ein Verschieben des äußeren Verriegelungselements 6 in Richtung der Längsachse A blockieren und verriegeln. Gleichzeitig werden hierdurch die Aussparungen 43 des Gehäuses 4, durch die die Verriegelungsbacken 51 des inneren Verriegelungskörpers 5 radial hinaus gedrückt werden können, durch die Abdeckungen 63 des äußeren Verriegelungskörpers 6 blockiert und verriegelt.

Auf diese Weise wird der Stutzen 1 in der Schnellverbindungsanordnung 3 dadurch sicher gehalten, dass die Hintergriffsschrägen 53 der Verriegelungsbacken 51 hinter den Bund 11 in Richtung der Längsachse A greifen. Das Auflösen dieser Verriegelung wird dadurch erfindungsgemäß verhindert, dass die Aussparungen 43 des Gehäuses 4, durch die die Verriegelungsbacken 51 radial durch den Bund 11 herausgedrückt werden können, durch die Abdeckungen 63 des äußeren Verriegelungselements 6 blockiert werden. Das Auflösen dieser Blockade wiederum wird dadurch verhindert, dass die Nocken 62 der Rastarme 61 in die entsprechenden Aussparungen 42 des Gehäuses 4 radial eingreifen und so ein ungewolltes Verschieben des äußeren Verriegelungselements 6 in Richtung der Längsachse A verhindern, welches ansonsten die Aussparungen 43 des Gehäuses 4, durch die die Verriegelungsbacken 51 radial durch den Bund 11 herausgedrückt werden können, freigeben würde.

Entsprechend kann die Verbindung zwischen Stutzen 1 und Schnellverbindungsanordnung 3 dadurch gelöst werden, indem die Rastarme 61 des äußeren Verriegelungselements 6 soweit radial angehoben werden, dass die Nocken 62 der Rastarme 61 aus den entsprechenden Aussparungen 42 des Gehäuses 4 herausragen und dann das äußere Verriegelungselement 6 in Richtung der Längsachse A in Richtung des entsprechenden Anschlags 45 des Gehäuses 4 soweit verschoben wird, dass die Abdeckungen 63 der äußeren Verriegelungselements 6 die Aussparungen 43 des Gehäuses 4, durch die die Verriegelungsbacken 51 radial durch den Bund 11 herausgedrückt werden können, wieder freigeben.

Dann kann können der Stutzen 1 und die Schnellverbindungsanordnung 3 relativ zueinander voneinander weg bewegt werden, so dass der Bund 11 des Stutzens 1 die Verriegelungsbacken 51 mittels der Hintergriffsschrägen 53 radial anhebt und durch die Aussparungen 43 des Gehäuses 4 hindurch drückt. Sobald der Bund 11 die Einführungsschrägen 52 der Verriegelungsbacken 51 in Richtung der Längsachse A aus dem Gehäuse 4 heraus passiert hat, federn die Verriegelungsbacken 51 wieder radial nach innen zurück, Stutzen 1 und Schnellverbindungsanordnung 3 sind getrennt und die Schnellverbindungsanordnung 3 hat den Ausgangszustand der Montage erreicht.

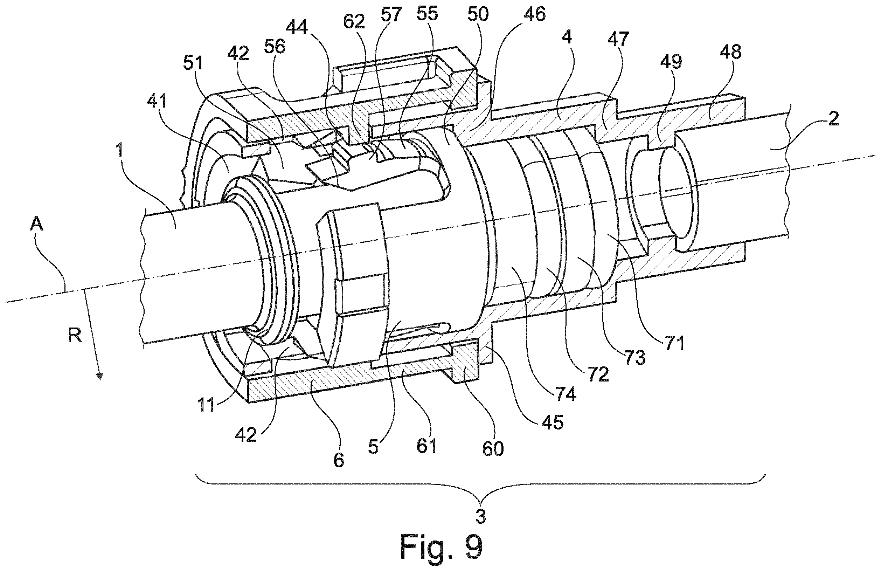

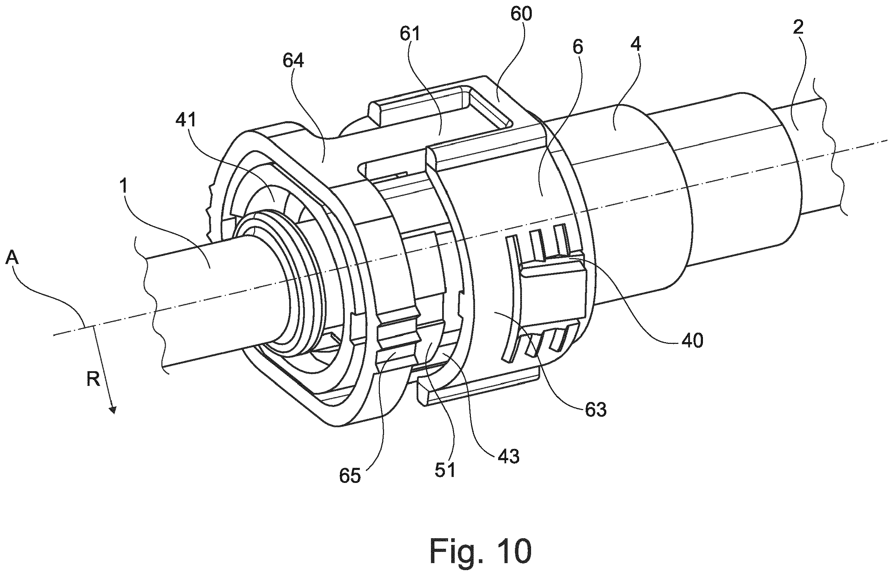

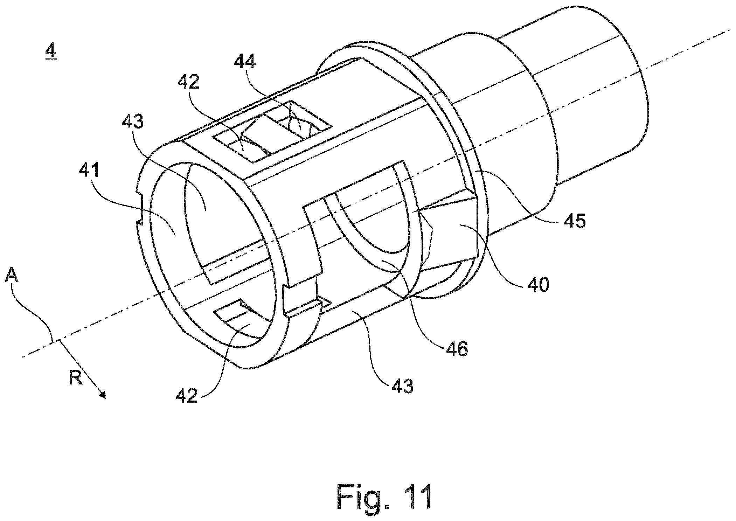

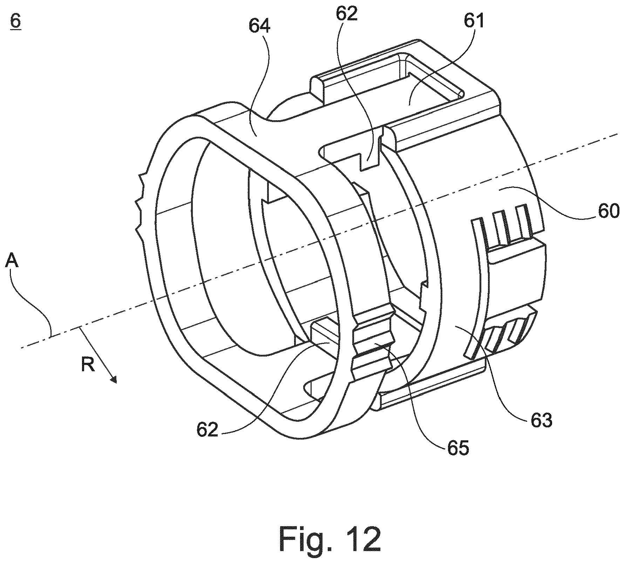

**Fig. 9** zeigt eine perspektivische schematische Schnittdarstellung einer erfindungsgemäßen Schnellverbindungsanordnung 3 gemäß einem zweiten Ausführungsbeispiel mit Fluidleitung 2 und teilweise eingeführtem aber nicht verriegeltem Stutzen 1. **Fig. 10** zeigt eine perspektivische schematische geschlossene Darstellung der Schnellverbindungsanordnung 3 der **Fig. 9****.** Das Gehäuse 4 und das äußere Verriegelungselement 6 gemäß dem zweiten Ausführungsbeispiel sind in den **Fig. 11** **und** **12** jeweils in einer perspektivischen schematischen Darstellung einzeln dargestellt. Das innere Verriegelungselement 5 ist in beiden Ausführungsbeispielen identisch, vgl. **Fig. 4****.**

Dabei unterscheidet sich die Schnellverbindungsanordnung 3 gemäß dem zweiten Ausführungsbeispiel von der des ersten Ausführungsbeispiels zum einen dadurch, dass das Gehäuse 4 nun zwei radial nach außen zeigende Vorsprünge 40 aufweist, die einander radial gegenüber liegend angeordnet sind. Diese Vorsprünge 40 sind derart keilförmig ausgebildet, dass sie jeweils eine Schräge aufweisen, die in axialer Richtung A zur Stutzenöffnung 41 hin ausgerichtet ist.

Ist der Stutzen 1 gar nicht bzw. nicht vollständig in die Stutzenöffnung 41 des Gehäuses 4 eingeführt, so befindet sich das äußere Verriegelungselement 6 in einem Montagezustand, in dem es mit seinem ringförmigen Verriegelungskörper 60 an dem entsprechenden Anschlag 45 des Gehäuses 4 anliegt und durch die Nocken 62 seiner Rastarme 61 in der entsprechenden Öffnungsaussparung 42 des Gehäuses 4 eingerastet ist, siehe **Fig. 9****.** In diesem Montagezustand drücken nun die keilförmigen Vorsprünge 40 derart von Innen gegen den ringförmigen Verriegelungskörper 60, dass er in axialer Richtung A eine Vorspannung erfährt. Diese kann dadurch unterstützt werden, dass der ringförmige Verriegelungskörper 60 in diesem Bereich durch axiale Schlitze derart ausgebildet, dass ein Teilbereich des ringförmigen Verriegelungskörpers 60 federnd gegen die Vorsprünge (40) des Gehäuses (4) drückt.

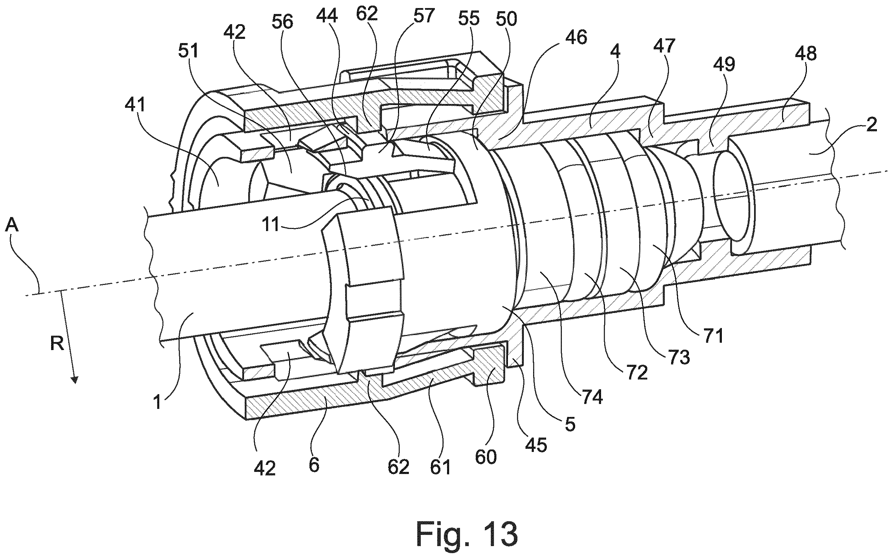

Wird dann der Stutzen 1 vollständig in das Gehäuse 4 eingeführt, so drücken auch bei der Schnellverbindungsanordnung 3 gemäß des zweiten Ausführungsbeispiels die Nocken 57 der Auswerferarme 55 des inneren Verriegelungselements 5 die Nocken 62 der Rastarme 61 des äußeren Verriegelungselements 6 aus den entsprechenden Aussparungen 44 des Gehäuses 4, vgl. **Fig. 13****.** Nun kann die Vorspannung der keilförmigen Vorsprünge 40 das äußere Verriegelungselement 6 in axialer Richtung A soweit bewegen, dass das äußere Verriegelungselement 6 mit den Nocken 62 seiner Rastarme 61 in den Öffnungsaussparungen 42 des Gehäuses 4 erneut einrastet und mit seinen Verriegelungsabdeckungen 63 die Aussparungen 43 der Verriegelungsbacken 51 des inneren Verriegelungselements 5 radial blockiert.

Dabei wird durch die Schnellverbindungsanordnung 3 gemäß dem zweiten Ausführungsbeispiel dieselbe sichere und optisch und taktil erkennbare Sicherung der Schnellverbindung erreicht wie bei der Schnellverbindungsanordnung 3 gemäß dem ersten Ausführungsbeispiel, jedoch erfolgt das axiale Verschieben des äußeren Verriegelungselements 6 aufgrund der Vorspannung automatisch durch die Schnellverbindungsanordnung 3 selbst, wodurch sich die Montage vereinfacht und beschleunigt.

Es unterscheidet sich die Schnellverbindungsanordnung 3 gemäß dem zweiten Ausführungsbeispiel von der des ersten Ausführungsbeispiels zum anderen dadurch, dass das äußere Verriegelungselement 6 einen Öffnungsring 64 aufweist. Dieser Öffnungsring 64 ist an der dem Stutzen zugewandten Seite des äußeren Verriegelungselements 6 ausgebildet und weist einen im Wesentlichen ovalen Querschnitt auf, d.h. der Durchmesser des Öffnungsrings 64 ist in einer radialen Richtung R größer als in der hierzu im Wesentlichen senkrecht stehenden radialen Richtung R. Dabei werden die Bereiche des größeren Querschnitts als Eindrückbereiche 65 bezeichnet. Die Bereiche des kleineren Querschnitts sind im Wesentlichen in axialer Richtung A den Rastarmen 61 benachbart ausgebildet, vgl. **Fig. 12****.** In diesem zweiten Ausführungsbeispiel ist die Geometrie des Gehäuses 4 im Bereich der Stutzenöffnung 51 der Geometrie des Öffnungsrings 64 entsprechend ausgebildet, vgl. **Fig. 11****.**

Wird ein Stutzen 1 vollständig in die Schnellverbindungsanordnung 3 gemäß dem zweiten Ausführungsbeispiel eingeführt, so werden die Nocken 57 der Auswerferarme 55 des inneren Verriegelungselements 5 durch die Nocken 62 der Rastarme 61 des äußeren Verriegelungselements 6 aus den entsprechenden Aussparungen 44 des Gehäuses 4 herausgedrückt, vgl. **Fig. 13****.** Dabei verformt sich der Öffnungsrings 64 dahingehend, dass der kleine Durchmesser im Bereich der Rastarme 61 vergrößert und entsprechenden die Eindrückbereiche 65 radial nach innen zusammengezogen werden.

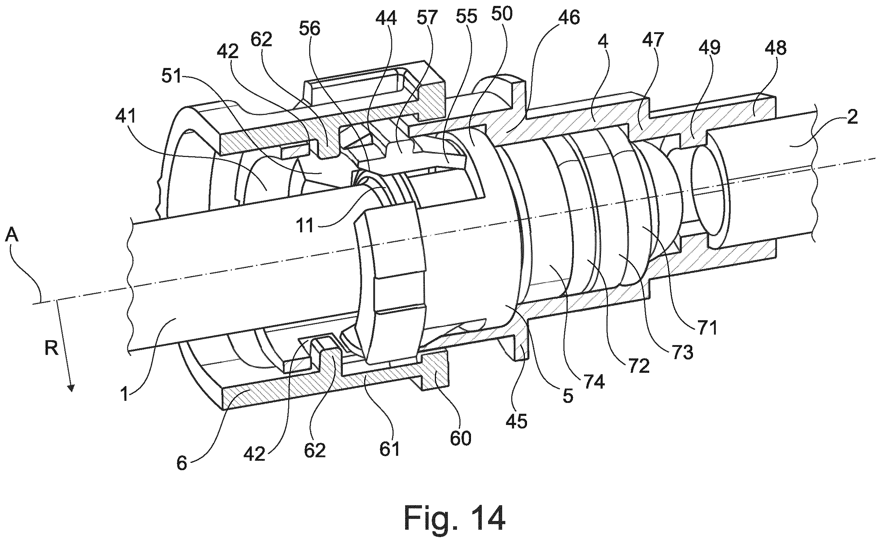

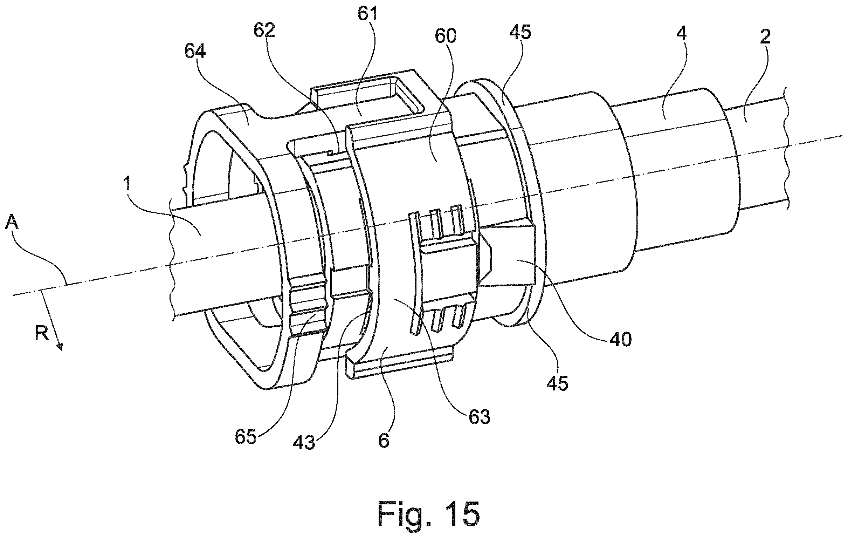

Ist das äußere Verriegelungselement 6 axial bewegt worden und sind die Nocken 62 seiner Rastarme 61 in die Öffnungsaussparungen 42 des Gehäuses 4 erneut eingerastet, so entspannt sich der Öffnungsring 64 wieder in seine ovale Ausgangsform zurück. Die Verriegelung des inneren Verriegelungselements 5 durch das äußere Verriegelungselement 6 hat somit Bestand, vgl. **Fig. 14** **und** **15****.**

Soll diese Verriegelung aufgehoben werden, so kann dies bei der Schnellverbindungsanordnung 3 gemäß dem zweiten Ausführungsbeispiel sehr einfach dadurch erfolgen, dass die Eindrückbereiche 65 des Öffnungsrings 64 radial nach innen zusammengedrückt werden, z.B. manuell. Durch das Zusammendrücken des Durchmessern des Öffnungsrings 64 im Bereich der Eindrückbereiche 65 wird der Öffnungsring 64 im Bereich der Rastarme 61 radial aufgeweitet, so dass sich die Nocken 62 der Rastarme 61 des äußeren Verriegelungselements 6 aus den Öffnungsaussparungen 42 des Gehäuses 4 radial heraus bewegen. Auf diese Weise kann das äußere Verriegelungselement 6 im diesem Zustand der zusammengedrückten Eindrückbereiche 65 in axialer Richtung A in Richtung der entsprechenden Anschläge 45 des Gehäuses 4 bewegt werden, so dass die Verriegelungsabdeckungen 63 des äußeren Verriegelungselements 6 die entsprechenden Aussparungen 43 des Gehäuses 4 freigeben und der Stutzen 1 aus dem Gehäuse 4 axial herausgezogen werden kann.

Dabei wird durch die Schnellverbindungsanordnung 3 gemäß dem zweiten Ausführungsbeispiel dieselbe sichere und optisch und taktil erkennbare Sicherung der Schnellverbindung erreicht wie bei der Schnellverbindungsanordnung 3 gemäß dem ersten Ausführungsbeispiel, jedoch kann das Aufheben der Schnellverbindung einfacher und schneller erfolgen, wodurch sich die Demontage vereinfacht und beschleunigt.

### Bezugszeichenliste

### (Teil der Beschreibung)

- A: Längsachse
- R: Radius, radiale Richtung senkrecht zur Längsachse A

- 1: (SAE-)Stutzen
- 11: radialer Vorsprung, vorzugsweise Bund des Stutzens 1
- 2: Medienleitung, vorzugsweise Fluidleitung
- 3: Schnellverbindungsanordnung
- 4: Gehäuse der Schnellverbindungsanordnung 3
- 40: Vorsprung
- 41: Stutzenöffnung
- 42: Öffnungsaussparung für Nocken 62 der Rastarme 61
- 43: Aussparung für Verriegelungsbacken 51, Verriegelungsarmaussparung
- 44: Aussparung für Nocken 57 der Auswerferarme 55 und Nocken 62 der Rastarme 61
- 45: Anschlag für äußeres Verriegelungselement 6
- 46: Anschlag für inneres Verriegelungselement 5
- 47: Anschlag für ersten Dichtungsring 71
- 48: Öffnung für Fluidleitung 2
- 49: Anschlag für Fluidleitung 2
- 5: inneres Verriegelungselement
- 50: ringförmiger Verriegelungselementkörper
- 51: Verriegelungsbacken, Verriegelungsarm
- 52: Einführungsschräge der Verriegelungsbacken 51
- 53: Hintergriffsschräge der Verriegelungsbacken 51
- 55: Auswerferarme, Freigabemechanismus
- 56: Einführungsschräge der Auswerferarme 55
- 57: Nocken der Auswerferarme 55
- 6: äußeres Verriegelungselement
- 60: ringförmiger Verriegelungsringkörper
- 61: Rastarme, Blockademechanismus
- 62: Nocken der Rastarme 61
- 63: (Verriegelungsarm-)Abdeckung
- 64: Öffnungsring
- 65: Eindrückbereich des Öffnungsrings 64
- 71: erster Dichtungsring (O-Ring)
- 72: zweiter Dichtungsring (O-Ring)
- 73: Abstandsring
- 74: Führungsbuchse

## Patentansprüche

1. Schnellverbindungsanordnung (3) zur lösbaren Verbindung einer Medienleitung (2) mit einem (SAE-)Stutzen (1), mit
einem Gehäuse (4), mit
einer Öffnung (48) zur Aufnahme der Medienleitung (2), und
einer Stutzenöffnung (41) zur Aufnahme des (SAE-)Stutzens (1), so dass zwischen der Medienleitung (2) und dem (SAE-)Stutzen (1) ein Medium durch das Gehäuse (4) geführt werden kann,
einem inneren Verriegelungselement (5) zur Verriegelung des (SAE-)Stutzens (1) in der Stutzenöffnung (41), welches im Wesentlichen innerhalb der Stutzenöffnung (41) angeordnet ist, und
einem äußeren Verriegelungselement (6) zur Verriegelung des inneren Verriegelungselements (5) bei verriegeltem (SAE-)Stutzen (1), welches im Wesentlichen außerhalb der Stutzenöffnung (41) angeordnet ist,
**dadurch gekennzeichnet, dass**
das innere Verriegelungselement (5) wenigstens einen Freigabemechanismus (55) aufweist, welcher das äußere Verriegelungselement (6) von einem in Richtung der Längsachse A im Wesentlichen unbeweglichen Zustand in einen beweglichen Zustand versetzt, wenn der (SAE-)Stutzen (1) in die Stutzenöffnung (41) eingeführt wird,
wobei das Gehäuse (4) wenigstens eine Aussparung (44) aufweist, durch die hindurch der Freigabemechanismus (55) des inneren Verriegelungselements (5) einen Blockademechanismus (61) des äußeren Verriegelungselements (6) lösen kann, wenn der (SAE-)Stutzen (1) in die Stutzenöffnung (41) eingeführt wird.

2. Schnellverbindungsanordnung (3) nach Anspruch 1,
wobei das Gehäuse (4) wenigstens eine Verriegelungsarmaussparung (43) aufweist, aus der ein Verriegelungsarm (51) des inneren Verriegelungselements (5) radial herausgedrückt werden kann, und
wobei das äußere Verriegelungselement (6) wenigstens eine Verriegelungsarmabdeckung (63) aufweist, die in einer ersten Position die Verriegelungsarmaussparung (43) freigeben und in einer zweiten Position die Verriegelungsarmaussparung (43) blockieren kann.

3. Schnellverbindungsanordnung (3) nach Anspruch 2,
wobei das äußere Verriegelungselement (6) zwischen der ersten Position und der zweiten Position im Wesentlichen in Richtung der Längsachse A der Schnellverbindungsanordnung (3) bewegt werden kann.

4. Schnellverbindungsanordnung (3) nach Anspruch 2 oder 3,
wobei das äußere Verriegelungselement (6) sowohl in der ersten Position als auch in der zweiten Position gegenüber dem Gehäuse (4) positioniert gehalten werden kann.

5. Schnellverbindungsanordnung (3) nach einem der Ansprüche 2 bis 4,
wobei das äußere Verriegelungselement (6) einen Öffnungsring (64) mit wenigstens einem Eindrückbereich (65) aufweist, so dass das in der zweiten Position blockierte äußere Verriegelungselement (6) durch radial nach innen gerichtete Krafteinwirkung im Eindrückbereich (65) aus der Blockade gelöst werden kann.

6. Schnellverbindungsanordnung (3) nach einem der vorherigen Ansprüche,
wobei das Gehäuse (4) wenigstens einen radial nach außen zeigenden Vorsprung (40) aufweist, der derart im Wesentlichen von innen radial gegen das äußere Verriegelungselement (6) drücken kann, dass hierdurch eine im Wesentlichen in axialer Richtung A zur Stutzenöffnung (41) hin gerichtete Kraft auf das äußere Verriegelungselement (6) ausgeübt werden kann.

## Claims

1. Quick connection arrangement (3) for detachably connecting a media line (2) to an (SAE) connecting piece (1), comprising
a housing (4), with
an opening (48) for receiving the media line (2), and
a connecting piece opening (41) for receiving the (SAE) connecting piece (1), and therefore, between the media line (2) and the (SAE) connecting piece (1), a medium can be guided through the housing (4),
an inner locking element (5) for locking the (SAE) connecting piece (1) in the connecting piece opening (41), said inner locking element being substantially arranged within the connecting piece opening (41), and
an outer locking element (6) for locking the inner locking element (5) when the (SAE) connecting piece (1) is locked, said outer locking element being substantially arranged outside the connecting piece opening (41), **characterized in that** the inner locking element (5) has at least one release mechanism (55) which moves the outer locking element (6) from a substantially immovable state in the direction of the longitudinal axis A into a movable state when the (SAE) connecting piece (1) is introduced into the connecting piece opening (41), wherein the housing (4) has at least one recess (44) through which the release mechanism (55) of the inner locking element (5) can release a blockade mechanism (61) of the outer locking element (6) when the (SAE) connecting piece (1) is introduced into the connecting piece opening (41).

2. Quick connection arrangement (3) according to Claim 1,
wherein the housing (4) has at least one locking arm recess (43) from which a locking arm (51) of the inner locking element (5) can be pushed out radially, and
wherein the outer locking element (6) has at least one locking arm covering (63) which, in a first position, can open up the locking arm recess (43) and, in a second position, can block the locking arm recess (43) .

3. Quick connection arrangement (3) according to Claim 2,
wherein the outer locking element (6) can be moved between the first position and the second position substantially in the direction of the longitudinal axis A of the quick connection arrangement (3).

4. Quick connection arrangement (3) according to Claim 2 or 3,
wherein the outer locking element (6) can be held both in the first position and in the second position in a manner positioned in relation to the housing (4).

5. Quick connection arrangement (3) according to one of Claims 2 to 4,
wherein the outer locking element (6) has an opening ring (64) with at least one push-in region (65) such that the outer locking element (6), which is blocked in the second position, can be released from the blockade by a radially inwardly directed action of force in the push-in region (65).

6. Quick connection arrangement (3) according to one of the preceding claims,
wherein the housing (4) has at least one radially outwardly pointing projection (40) which can push against the outer locking element (6) substantially from the inside radially in such a manner that a force which is directed substantially in the axial direction A toward the connecting piece opening (41) can thereby be exerted on the outer locking element (6).

## Revendications

1. Dispositif de raccordement rapide (3) pour le raccordement libérable d'une conduite de fluide (2) à une rallonge (SAE) (1), avec
un corps (4), avec
une ouverture (48) destinée à recevoir la conduite de fluide (2), et
une ouverture de rallonge (41) destinée à recevoir la rallonge (SAE) (1), de telle manière qu'un fluide puisse être transporté à travers le corps (4) entre la conduite de fluide (2) et la rallonge (SAE) (1),
un élément de verrouillage intérieur (5) pour le verrouillage de la rallonge (SAE) (1) dans l'ouverture de rallonge (41), qui est disposé essentiellement à l'intérieur de l'ouverture de rallonge (41), et
un élément de verrouillage extérieur (6) pour le verrouillage de l'élément de verrouillage intérieur (5) lorsque la rallonge (SAE) (1) est verrouillée, qui est disposé essentiellement à l'extérieur de l'ouverture de rallonge (4),
**caractérisé en ce que**
l'élément de verrouillage intérieur (5) présente au moins un mécanisme de libération (55), qui déplace l'élément de verrouillage extérieur (6) d'un état essentiellement immobile dans la direction de l'axe longitudinal A à un état mobile, lorsque la rallonge (SAE) (1) est introduite dans l'ouverture de rallonge (41),
dans lequel le corps (4) présente au moins une découpe (44), à travers laquelle le mécanisme de libération (55) de l'élément de verrouillage intérieur (5) peut libérer un mécanisme de blocage (61) de l'élément de verrouillage extérieur (6), lorsque la rallonge (SAE) (1) est introduite dans l'ouverture de rallonge (41).

2. Dispositif à raccordement rapide (3) selon la revendication 1,
dans lequel le corps (4) présente au moins une découpe de bras de verrouillage (43) hors de laquelle un bras de verrouillage (51) de l'élément de verrouillage intérieur (5) peut être repoussé radialement, et
dans lequel l'élément de verrouillage extérieur (6) présente au moins un recouvrement de bras de verrouillage (63), qui dans une première position peut libérer la découpe de bras de verrouillage (43) et dans une seconde position peut bloquer la découpe de bras de verrouillage (43) .

3. Dispositif de raccordement rapide (3) selon la revendication 2,
dans lequel l'élément de verrouillage extérieur (6) peut être déplacé entre la première position et la seconde position essentiellement dans la direction de l'axe longitudinal A du dispositif de raccordement rapide (3) .

4. Dispositif de raccordement rapide (3) selon la revendication 2 ou 3,
dans lequel l'élément de verrouillage extérieur (6) peut être maintenu en position aussi bien dans la première position que dans la seconde position par rapport au corps (4).

5. Dispositif de raccordement rapide (3) selon l'une quelconque des revendications 2 à 4,
dans lequel l'élément de verrouillage extérieur (6) présente une bague d'ouverture (64) avec au moins une zone d'enfoncement (65), de telle manière que l'élément de verrouillage extérieur (6) bloqué dans la seconde position puisse être libéré du blocage en appliquant une force dirigée radialement vers l'intérieur dans la zone d'enfoncement (65).

6. Dispositif de raccordement rapide (3) selon l'une quelconque des revendications précédentes,
dans lequel le corps (4) présente au moins une saillie (40) pointant radialement vers l'extérieur, qui peut presser essentiellement radialement de l'intérieur contre l'élément de verrouillage extérieur (6), de telle manière qu'une force dirigée essentiellement en direction axiale A vers l'ouverture de rallonge (41) puisse ainsi être exercée sur l'élément de verrouillage extérieur (6).
